# EUROPÄISCHE PATENTSCHRIFT

(11) **EP 2 656 472 B1**
(45) Veröffentlichungstag und Bekanntmachung des Hinweises auf die Patenterteilung: **07.09.2016**
(21) Anmeldenummer: 11788135.9
(22) Anmeldetag: 23.11.2011
(51) Int. Cl.: H02J 7/00, H02J 9/00, H01M 10/00, F21V 25/12, G05B 19/00, H01J 29/87, H02K 5/136, H04L 12/10, G05B 19/042, H01M 2/34, H02H 9/00

(54) **FELDGERÄT MIT EINER BATTERIEEINHEIT**
FIELD DEVICE INCLUDING A BATTERY UNIT
APPAREIL DE TERRAIN COMPORTANT UNE UNITÉ DE BATTERIE

(30) Priorität: 21.12.2010 DE 102010063783
(43) Veröffentlichungstag der Anmeldung: 30.10.2013
(73) Patentinhaber: Endress+Hauser Process Solutions AG, 4153 Reinach (CH)
(72) Erfinder: SEILER, Christian, 79424 Auggen (DE); FIEDLER, Marc, CH-4153 Reinach (CH)
(74) Vertreter: Andres, Angelika Maria
(86) Internationale Anmeldenummer: PCT/EP2011/070848
(87) Internationale Veröffentlichungsnummer: WO 2012/084394

(56) Entgegenhaltungen:
- US-A- 3 659 180
- US-A- 5 200 686
- US-A- 5 216 371
- US-A- 5 473 242
- US-A- 5 729 115
- US-A1- 2007 145 827
- US-B1- 7 202 576

## Beschreibung

Die Erfindung bezieht sich auf eine Vorrichtung umfassend eine Elektronikeinheit und eine Batterieeinheit, wobei die Batterieeinheit über eine Batterie mit einem ersten und einem zweiten Pol verfügt.

Ferner bezieht sich die Erfindung auf eine Batterieeinheit und eine Elektronikeinheit zur Verwendung in einer solchen Vorrichtung und auf ein Feldgerät mit einer solchen Vorrichtung.

Die US 2007/0145827 offenbart eine unterbrechungsfreie Stromversorgungsschaltung mit einer separaten Batterieeinheit, die über drei Kontakte mit dem Steuergerät verbunden ist, und eine Schaltung zur Strombegrenzung. Ein Sensor in der Batterieeinheit ermittelt Betriebsparameter und gibt diese an das Steuergerät weiter. Die drei Kontakte sind mechanisch gegeneinander versetzt, so daß sie beim Anschließen der Batterieeinheit in einer vorgegebenen Reihenfolge kontaktiert werden.

Eine Batterie mit drei Kontakten ist aus der US 7,202,576 bekannt.

Die US 5,729,115 beschreibt ein Gerät zum Laden unterschiedlicher Batterietypen, die über einen dreipoligen Kontakt angeschlossen werden.

Heutzutage werden eine Vielzahl von elektrischen und/oder elektronischen Geräten durch eine Batterie bzw. eine Batterieeinheit mit Energie versorgt. Unter einer Batterie wird dabei im Sinne der vorliegenden Anmeldung auch ein Akkumulator oder anderer entladbarer Energiespeicher bzw. Energiewandler, wie bspw. ein Kondensator, der/die eine begrenzte Menge an Energie liefern kann, verstanden. Die Batterie weist dabei einen elektrisch positiven und einen elektrisch negativen Pol auf. Das Gerät bzw. insbesondere dessen Elektronikeinheit kann dann mit aus der Batterie entnommener elektrischer Energie bspw. in Form eines elektrischen Stroms und/oder einer elektrischen Spannung versorgt und betrieben werden.

Solche batteriebetriebenen Geräte sind auch im Bereich der Prozessautomatisierungstechnik bekannt geworden. So werden bspw. Feldgeräte mit einer batteriebetriebenen Funkeinheit aufgerüstet, die über eine Batterieeinheit mit einer Batterie verfügt. In diesem Zusammenhang ist es bekannt geworden, sowohl die Funkeinheit als auch das daran angeschlossene Feldgerät mit elektrischer Energie aus der Batterie der Batterieeinheit zu versorgen. Ferner existieren bereits autarke Feldgeräte, die über eine Batterie verfügen, die zur Versorgung des Feldgerätes mit der von dem Feldgerät benötigten Energie dienen. Als Feldgeräte werden dabei im Prinzip alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die bspw. direkt an einem Feldbus angeschlossen sind und zur Kommunikation mit den übergeordneten Einheiten dienen, wie z.B. Remote I/Os, Gateways, Linking Devices und Funkeinheiten. Bei batteriebetriebenen Feldgeräten wird selbstverständlich angestrebt deren Laufzeit bzw. Standzeit so weit wie möglich zu verlängern. Aus dem Stand der Technik sind heutzutage zu diesem Zweck zahlreiche Verfahren und Schaltungen bekannt geworden.

Jedoch gelten in explosionsgefährdeten Zonen besondere Anforderungen an dort eingesetzte insbesondere elektrische und/oder elektronische Gerätschaften. So ist es bspw. aus dem Stand der Technik bekannt geworden, auch batteriebetriebene Feldgeräte in explosionsgefährdeten Zonen einzusetzen. Solche Feldgeräte verfügen über eine Strom- und/oder Spannungsbegrenzung, um die gestellten Anforderungen einzuhalten. Dabei werden entsprechende Mittel zur Strom- und/oder Spannungsbegrenzung seitens der Elektronikeinheit im Bereich des Batterieanschlusses als auch in der Batterie selbst vorgesehen, um zündfähige elektrische Energiemengen zu verhindern. Diese Ex-Begrenzungsmaßnahmen haben aber aufgrund der Mittel zur Strom- und/oder Spannungsbegrenzung im Anschlussbereich des Feldgerätes als auch in der Batterieeinheit eine nicht unwesentliche Verlustleistung zur Folge. Diese Verlustleistung kann nicht genutzt werden und verkürzt die Lebensdauer der Batterie.

Geräte, die ausschließlich für den Betrieb in einem nicht explosionsgefährdeten Bereich vorgesehen sind, weisen diese strom- und/oder spannungsbegrenzenden Maßnahmen nicht auf. Der Anteil der Anwendungen in einer nicht explosionsgefährdeten Zone liegt heute bei ca. 80-90% aller Anwendungen.

Aus Kostengründen lohnt es sich häufig nicht, zwei Varianten einer Batterieeinheit bzw. eines batteriebetriebenen Feldgerätes herzustellen, daher wird dann meist die Ex-Variante der Batterie bzw. des Feldgerätes auch im nicht-Ex-Bereich eingesetzt. Aufgrund des hohen Energieverbrauchs, der sich durch die Ex-Begrenzungsmaßnahmen ergibt, ist man jedoch häufig gezwungen entweder die Batterieeinheit und/oder das Feldgerät auch ohne die Ex-Begrenzungsmaßnahmen herzustellen und/oder anzubieten.

Außerdem benötigen Feldgeräte wie Sensoren, Aktoren oder Anzeige- und/oder Bedieneinheiten je nach Funktionalität wie bspw. dem verwendeten Messprinzip unterschiedliche Energiemengen, weisen also eine unterschiedliche Leistungs- und/oder Energieaufnahme auf. Es ist daher notwendig verschiedene Varianten von Batterieeinheiten und/oder Elektronikeinheiten herzustellen, um eine an die Funktion des Feldgerätes oder des Gerätes allgemein angepasste Energieversorgung zur Verfügung zu stellen.

Aufgrund der Vielzahl von Herstellern von (Feld-)Geräten und (Feld-)Gerätetypen sind heutzutage unterschiedliche Formen von Gehäusen einer Batterieeinheit und einer Elektronikeinheit sowie unterschiedliche Kontaktierungen derselben bekannt geworden. Dabei ist eine bestimmte Batterieeinheit meist speziell auf ein einziges Gerät bzw. einen Gerätetyp abgestimmt und daher nur in Kombination mit diesem verwendbar. Ferner ist die einer Batterieeinheit entnehmbare elektrische Leistung meist durch die Leerlaufspannung zwischen den üblicherweise zwei Kontakten der Batterieeinheit vorgegeben und ist somit nicht variierbar.

Der Erfindung liegt die Aufgabe zugrunde diese aus dem Stand der Technik bekannten Nachteile zu überwinden.

Die Erfindung ist in Anspruch 1 definiert, der gegen die US 2007/0145827 abgegrenzt wurde. Aus den abhängigen Ansprüchen ergeben sich bevorzugte Ausführungsformen.

Es wird also eine Batterieeinheit mit einer Batterie, die über zumindest drei, elektrische Kontakte verfügt, vorgeschlagen. Dabei sind wenigstens zwei der Kontakte an ein und denselben Pol der Batterie angeschlossen und einer der Kontakte an dem anderen Pol der Batterie. Somit weist ein Pol der Batterie immer zumindest mehrere elektrische Kontakte auf, über die er kontaktierbar ist. In einer Ausgestaltung weist jeder der beiden Pole mehrere, bspw. zwei, elektrische Kontakte auf. Dabei ist die Batterieeinheit mit einer Elektronikeinheit über entsprechende Kontakte und entsprechenden Gegenkontakten elektrisch und vorzugsweise auch mechanisch verbindbar.

Der erste Gegenkontakt dient dabei dazu, die Eingangsschaltung mit einem ersten Pol der Batterie der Batterieeinheit zu verbinden und der zweite Gegenkontakt dient dazu, die Eingangsschaltung mit einem zweiten Pol der Batterie zu verbinden. Dabei kann der erste Pol der Batterie über den ersten Kontakt und/oder dritten Kontakt mit der dem ersten Gegenkontakt verbindbar sein. Der zweite Pol der Batterie kann über den zweiten Kontakt mit dem zweiten Gegenkontakt verbindbar sein. Die vorgeschlagene Batterieeinheit kann somit an unterschiedliche Elektronikeinheiten, die sich insbesondere hinsichtlich ihrer Kontaktierung, d.h. Anordnung der Gegenkontakte, voneinander unterscheiden, angeschlossen werden. Mit diesen unterschiedlichen Anschlusskonfigurationen können auch funktionelle Unterschiede wie bspw. die Menge der aus der Batterie entnehmbaren elektrischen Energie bspw. in Form von Spannung, Strom und/oder Leistung einhergehen, wobei diese Unterschiede durch die vorgeschlagenen Vorrichtung, insbesondere Batterieeinheit, kompensiert werden können.

Ferner können unterschiedliche Einbaupositionen vorgesehen sein, in denen die Batterieeinheit mit der Elektronikeinheit verbindbar ist, wobei die Übertragung der elektrischen Energie, insbesondere die elektrische Leistung" zwischen der Batterieeinheit und der Elektronikeinheit von der vorliegenden Einbauposition abhängig ist. Durch die Einbauposition können bspw. die Kontakte der Batterieeinheit mit den entsprechenden Gegenkontakten der Elektronikeinheit kontaktiert werden. Andererseits ist es möglich, dass in derselben Einbauposition, d.h. bei ein und derselben Orientierung der Batterieeinheit zur Elektronikeinheit eine unterschiedliche Kontaktierung und also eine Übertragung einer unterschiedlichen Menge an elektrischer Energie, insbesondere Leistung, zwischen Batterieeinheit und Elektronikeinheit zustande kommt. Entsprechend einer Ausgestaltung der vorliegenden Erfindung können dabei Verschluss- oder Kontaktmittel eingesetzt oder miteinander ausgetauscht werden, die eine elektrische Kontaktierung eines einzelnen oder mehrere Kontakte und/oder Gegenkontakte ermöglichen bzw. verhindern. Ferner können die Verschluss- und/oder Kontaktmittel dazu dienen, dass nur eine bestimmte Einbauposition zwischen Batterieeinheit und Elektronikeinheit möglich ist und dadurch insbesondere nur eine bestimmte Anschlusskonfiguration zwischen den Kontakten und Gegenkontakten ermöglicht wird.

In einer Ausgestaltung der Vorrichtung sind die elektrischen Kontakte bzw. Gegenkontakte Teil eines Einbausteckers oder einer Buchse, d.h. Teil eines Gehäuses, der Batterieeinheit bzw. der Elektronikeinheit. Insbesondere ist die Batterieeinheit und die Elektronikeinheit bzw. deren Gehäuse so ausgestaltet, dass die Batterieeinheit mit der Elektronikeinheit verbindbar ist und dadurch die elektrische Kontaktierung zwischen den Kontakten und den Gegenkontakten zustande kommt. Zu diesem Zweck können die Batterieeinheit und die Elektronikeinheit entsprechend geformte Gehäuse oder Gehäuseteile aufweisen, die korrespondierende Verbindungselemente aufweisen, die miteinander in Eingriff gelangen und an welchen Verbindungselementen die Kontakte der Batterieeinheit bzw. Gegenkontakte der Elektronikeinheit angeordnet sind.

In einer Ausführungsform der Vorrichtung ist elektrische Energie aus der Batterie der Batterieeinheit von der Batterieeinheit an die Elektronikeinheit im Wesentlichen über den ersten und den zweiten Kontakt und den ersten und zweiten Gegenkontakt oder im Wesentlichen über den zweiten und den dritten Kontakt und den ersten und zweiten Gegenkontakt übertragbar. Die Batterieeinheit ist bspw. so mit der Elektronikeinheit verbindbar, das wahlweise eine Kontaktierung zwischen dem ersten und dem zweiten Kontakt und dem ersten und zweiten Gegenkontakt oder zwischen dem zweiten und den dritten Kontakt und den ersten und zweiten Gegenkontakt erfolgt.

Der zweite Kontakt, sowie insbesondere auch der zweite Gegenkontakt, kann dabei aus mehren voneinander getrennten elektrischen Kontaktelementen bzw. Gegenkontaktelementen wie bspw. Steckern bestehen. Die Gegenkontaktelemente können durch die Eingangsschaltung der Elektronikeinheit elektrisch miteinander verbunden sein, wobei sie aber durch die Batterieeinheit nur einzeln kontaktierbar sind. In einer ersten Einbauposition kann bspw. ein erster Stecker als zweiter Gegenkontakt und in einer zweiten Einbauposition kann bspw. ein zweiter Stecker als zweiter Gegenkontakt dienen. Ebenso können die Kontaktelemente in der Batterieeinheit miteinander verbunden und/oder an einen gleichnamigen Pol der Batterie angeschlossen sein.

In einer Ausführungsform der Vorrichtung weist die Eingangsschaltung ferner wenigstens einen dritten elektrischen Gegenkontakt auf, und die Batterieeinheit ist so mit der Eingangschaltung verbindbar, dass elektrische Energie aus der Batterie der Batterieeinheit von der Batterieeinheit an die Elektronikeinheit im Wesentlichen über den ersten und den zweiten Kontakt und den ersten und zweiten Gegenkontakt oder im Wesentlichen über den zweiten und den dritten Kontakt und den zweiten und den dritten Gegenkontakt übertragbar ist. Während eine Umsetzung der vorgeschlagenen Erfindung für den ersten und den dritten Kontakt bzw. ersten und dritten Gegenkontakt stets unterschiedliche, d.h. voneinander getrennte, (Gegen-)Kontaktelemente wie bspw. Stecker oder Buchsen erfordert, kann der zweite Kontakt bzw. zweite Gegenkontakt auch durch nur jeweils ein einziges solches Kontaktelement realisiert sein. Allerdings ist es gemäß der vorliegenden Erfindung auch möglich, mehrere (Gegen-)Kontaktelemente zu verwenden, die als zweiter Kontakt bzw. als zweiter Gegenkontakt dienen, über welche (Gegen-)Kontaktelemente, wie bspw. Stecker, aber stets derselbe Pol der Batterie der Batterieeinheit kontaktiert wird.

In einer weiteren Ausgestaltung der Vorrichtung ist die Batterieeinheit, bevorzugt durch Ausrichten, insbesondere durch Drehen, besonders bevorzugt durch Drehen um ein Längsachse der Batterieeinheit, so mit der Eingangsschaltung der Elektronikeinheit verbindbar, dass entweder nur der erste Kontakt mit dem ersten Gegenkontakt und der zweite Kontakt und dem zweiten Gegenkontakt elektrisch verbunden sind, oder dass nur der zweite Kontakt mit dem zweiten Gegenkontakt und der dritte Kontakt mit dem dritten Gegenkontakt verbunden sind. Es können zu diesem Zweck mehrere Einbaupositionen vorgesehen sein in denen die Batterieeinheit mit der Elektronikeinheit verbindbar, insbesondere zusammensteckbar, ist.

In einer weiteren Ausgestaltung der Vorrichtung ist ein Verschlussmittel vorgesehen, das dazu dient, zumindest die elektrische Kontaktierung von zumindest einem der Kontakte, insbesondere des ersten Kontakts, und/oder von zumindest einem der Gegenkontakte, insbesondere des ersten Gegenkontaktes, zu verhindern. Dadurch kann bspw. eine elektrische Kontaktierung zwischen einem oder mehreren der Kontakte und Gegenkontakte verhindert werden, während die Einbauposition unverändert bleibt, oder aber es kann durch Setzen des Verschlussmittels eine Einbauposition, insbesondere eine von mehreren vorgegebenen Einbaupositionen, versperrt werden, so dass die damit verbundene Anschlusskonfiguration zwischen den Kontakten und Gegenkontakten nicht erreicht werden kann.

In einer weiteren Ausgestaltung der Vorrichtung dient das Verschlussmittel, das vorzugsweise aus einem im Wesentlichen elektrisch isolierenden Material besteht, dazu, wenigstens einen der Kontakte und/oder wenigstens einen der Gegenkontakte, insbesondere mechanisch, zu verschließen. Dadurch wird nicht nur der mechanische Verbindung sondern auch die elektrische Kontaktierung des entsprechenden Kontakts und/oder Gegenkontakts verhindert. Bei dem Verschlussmittel kann es sich insbesondere um eine Kappe, einen Stöpsel oder einen Stift handelt, die/der entfernt oder gesetzt werden können/kann. Ein Benutzer kann dieses Verschlussmittel auch vor Ort entfernen oder setzen, so dass seitens des Herstellers nur eine Variante des Gerätes auf Lager gehalten zu werden braucht.

In einer weiteren Ausgestaltung der Vorrichtung ist das Verschlussmittel durch ein Kontaktmittel, das vorzugsweise aus einem im Wesentlichen elektrisch leitfähigen Material besteht, ersetzbar, welches Kontaktmittel dazu dient, den elektrischen Kontakt zwischen zumindest einem der Kontakte, insbesondere dem ersten Kontakt, und zumindest einem der Gegenkontakte, insbesondere dem ersten Gegenkontakt, herzustellen.

In einer weiteren Ausgestaltung der Vorrichtung sind zur Beschränkung der der Elektronikeinheit zur Verfügung stehenden elektrischen Leistung, insbesondere gemäß den Bestimmungen der Zündschutzart Eigensicherheit (Ex), Mittel zur Strom- und/oder Spannungsbegrenzung in einem ersten Leitungszweig zwischen dem ersten Pol der Batterie und dem dritten Kontakt und/oder in einem zweiten Leitungszweig zwischen dem dritten Gegenkontakt und der Elektronikeinheit vorgesehen. Durch entsprechende Mittel kann eine Begrenzung der von der Batterieeinheit abgegebenen und/oder von der Elektronikeinheit aufgenommenen elektrischen Leistung erfolgen.

Durch die in dieser Ausgestaltung vorgeschlagene Vorrichtung wird eine konstruktive und schaltungstechnische Maßnahme in der Batterieeinheit als auch in der Eingangsschaltung einer Elektronikeinheit beschrieben, die es erlaubt eine (einzige) Gerätevariante für Ex- und nicht-Ex zu produzieren, ohne dass Energieverluste im nicht-Ex-Bereich in Kauf genommen werden müssen. Somit kann eine kostengünstige Produktion von Geräten erfolgen, da nur noch eine Variante für verschiedene Anschaltungen der Batterieeinheit und/oder der Elektronikeinheit, insbesondere Ex- oder nicht-Ex-Betrieb, vorgesehen sein muss.

In einer weiteren Ausgestaltung der Vorrichtung dient eine Kontaktierung der Batterieeinheit über den ersten und den zweiten Kontakt und den ersten und zweiten Gegenkontakt dazu, die Mittel zur Strom- und/oder Spannungsbegrenzung zu überbrücken. Somit treten keine Energieverluste bei der nicht-Ex-Version durch Ex-Begrenzungsmaßnahmen in der Batterieeinheit als auch im Feldgerät auf. Zu diesem Zweck kann ein Leitungszweig, der über den ersten Kontakt und den ersten Gegenkontakt führt einen geringeren elektrischen Widerstand aufweisen als ein Leitungszweig, der über den dritten Kontakt und den dritten Gegenkontakt führt.

In einer weiteren Ausgestaltung der Vorrichtung weist die Eingangsschaltung ferner einen ersten und einen zweiten Ausgang auf, über welchen die der Elektronikeinheit zur Verfügung stehende, und insbesondere der Batterie der Batterieeinheit entnommene, Energie abgreifbar ist. Dabei kann der erste Gegenkontakt und der dritte Gegenkontakt mit dem zweiten Ausgang verbunden sein und wobei der zweite Gegenkontakt mit dem ersten Ausgang verbunden sein.

In einer weiteren Ausgestaltung der Vorrichtung umfasst die Vorrichtung eine elektrische und/oder elektronische Schaltung, die, insbesondere anhand eines elektrischen Signals in dem ersten und/oder zweiten Leitungszweig, dazu dient, zu erkennen, ob die Energieversorgung der Elektronikeinheit im Wesentlichen über den ersten und den zweiten Kontakt bzw. Gegenkontakt oder im Wesentlichen über den zweiten und den dritten Kontakt bzw. Gegenkontakt erfolgt. Dabei kann es sich um eine digitale und/oder analoge Komparatorschaltung handeln, welche die beiden Eingangssignale miteinander vergleicht und ein entsprechendes Signal an die Elektronikeinheit ausgibt. Diese Detektionsschaltung erlaubt es zu erkennen, ob es sich bei der Anschaltung bspw. um eine Ex- oder nicht-Ex-Anschaltung handelt. Entsprechend können (Kalkulations-)Parameter für die Ermittlung der Batterielebensdauer und andere Einstellungen der Elektronikeinheit automatisch gesetzt werden.

In einer weiteren Ausgestaltung der Vorrichtung erfolgt die Strom- und/oder Spannungsbegrenzung durch wenigstens ein erstes elektrisches und/oder elektronisches Bauteil, insbesondere eine Diode, im zweiten Leitungszweig.

In einer weiteren Ausgestaltung der Vorrichtung besteht die elektrische und/oder elektronische Schaltung aus einer Komparatorschaltung, die ein erstes und ein zweites Eingangssignal miteinander vergleicht, wobei das erste Bauteil zwischen einem Abgriff für das erste Eingangssignal und einem Abgriff für das zweite Eingangssignal angeordnet ist. In einer weiteren Ausgestaltung der Vorrichtung ist zwischen dem Abgriff für das erste Eingangssignal und einem entsprechenden Eingang der Komparatorschaltung ein dem ersten Bauteil entsprechendes zweites Bauteil angeordnet, welches im Wesentlichen dieselben physikalischen, insbesondere elektrischen, Eigenschaften wie das erste Bauteil aufweist.

Die Aufgabe wird erfindungsgemäß auch durch eine Batterieeinheit zur Verwendung in einer Vorrichtung nach einer der vorherigen Ausgestaltungen gelöst.

Die Aufgabe wird erfindungsgemäß auch durch eine Elektronikeinheit zur Verwendung in einer Vorrichtung nach einer der vorherigen Ausgestaltungen gelöst.

Ferner wird die Aufgabe durch ein Feldgerät der Prozessautomatisierungstechnik mit einer Vorrichtung nach einer der vorherigen Ausgestaltungen gelöst. Die Batterieeinheit kann dabei in das Feldgerät und dessen Gehäuse eingesetzt und mit der Elektronikeinheit des Feldgerätes verbunden werden. Bei dem Feldgerät kann es sich um einen Sensor einen Aktor, eine Anzeige und/oder eine Bedieneinheit handeln. Ferner kann es sich bei dem Feldgerät um eine Funkeinheit handeln, die an ein Feldgerät anschließbar ist. Bei der Elektronikeinheit kann es sich um die Betriebelektronik des Feldgerätes handeln durch welches dieses gesteuert wird und die zur Ausführung der Funktionen des Feldgerätes, insbesondere zum Energieverwaltung des Feldgerätes, dient.
Die Erfindung wird anhand der nachfolgenden Zeichnungen näher erläutert. Es zeigt:
Fig. 1: eine schematische Darstellung einer Batterieeinheit und einer Eingangsschaltung einer Elektronikeinheit in einer ersten Ausführungsform der vorgeschlagenen Erfindung,
Fig. 2: eine schematische Darstellung einer Batterieeinheit und einer Eingangsschaltung einer Elektronikeinheit in einer zweiten Ausführungsform der vorgeschlagenen Erfindung, und
Fig. 3: eine schematische Darstellung einer Batterieeinheit und einer Eingangsschaltung einer Elektronikeinheit in einer dritten Ausführungsform der vorgeschlagenen Erfindung.

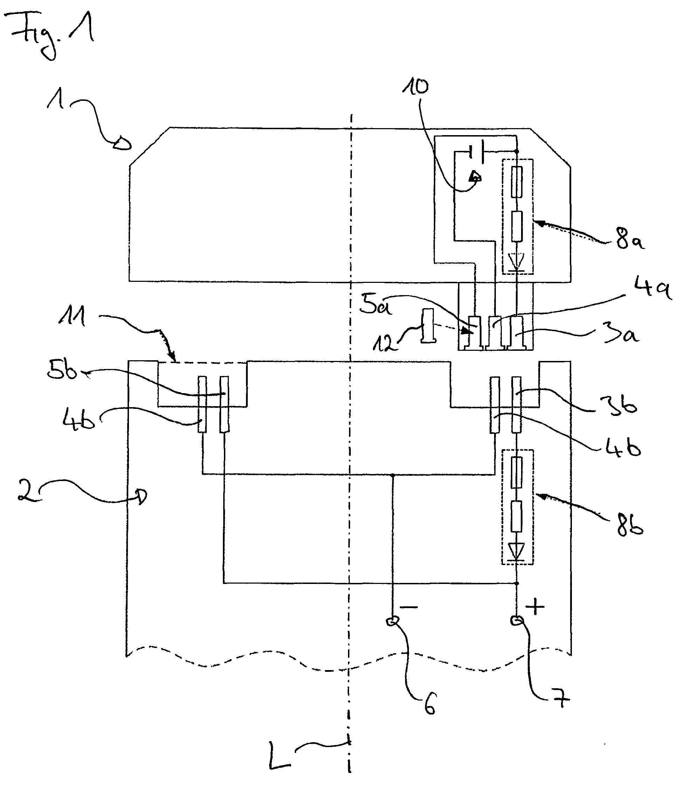

Figur 1 zeigt eine Batterieeinheit 1 und eine Elektronikeinheit 2, die ineinander steckbar sind. Dabei sind zwei Einbaupositionen vorgesehen, in denen die Batterieeinheit 1 und die Elektronikeinheit 2 miteinander verbindbar sind. Das Verbinden in einer Einbauposition erfolgt dabei durch entsprechendes Ausrichten der Batterieeinheit 1 gegenüber der Elektronikeinheit 2 bzw. gegenüber der Eingangschaltung der Elektronikeinheit 2 und dessen Gehäuse. Dabei wird die Batterieeinheit 1 bzgl. ihrer Längsachse L gedreht, so dass das Gehäuse der Batterieeinheit 1 mit einem korrespondierend geformten Gehäuseteil der Elektronikeinheit 2 in Eingriff gelangen kann. Entsprechende Aufnahmebuchsen des Gehäuses der Elektronikeinheit 2 die Gegenkontakte 3b, 4b bzw. 4b, 5b zu den Kontakten 3a, 4a bzw. 4a, 5a der Batterieeinheit 1 enthalten sind in Figur 1 gezeigt.

Die Batterieeinheit 1 weist eine Batterie 10 auf, wobei ein Pol der Batterie 10 mit zwei elektrischen Kontakten 3a, 5a, über welche die Batterie 10 kontaktierbar ist, verbunden ist. Der andere Pol der Batterie ist gemäß dem in Figur 1 gezeigten Ausführungsbeispiel nur mit einem elektrischen Kontakt 4a verbunden. Dabei sind der erste und der dritte Kontakt 5a, 3a der Batterieeinheit 1 an denselben Pol der Batterie 1 angeschlossen, wobei in dem Leitungszweig der den dritten Kontakt 3a mit dem Pol der Batterie 10 verbindet Mittel zur Strom- und Spannungsbegrenzung 8a vorgesehen sind. In dem Leitungszweig, der den Pol mit dem ersten Kontakt 5a verbindet sind solche Mittel nicht vorgesehen. Ebenso ist der Leitungszweig, der den anderen Pol der Batterie 10 mit dem zweiten Kontakt 4a verbindet, keine Mittel zur Strom und Spannungsbegrenzung vorgesehen. Die elektrischen Kontakte 3a, 4a, 5a bestehen dabei bspw. aus Anschlussbuchsen, die zum Kontaktieren von Anschlusssteckern, die elektrische Gegenkontakte 3b, 4b, 5b zu den Kontakten 3a, 4a, 5a der Batterieeinheit 1 bilden, dienen.

In Figur 1 ist ferner eine Eingangsschaltung der Elektronikeinheit 2 mit einem Gehäuse gezeigt, welches so geformt ist, dass die Batterieeinheit 1 in zwei Einbaupositionen mit der Elektronikeinheit 1 bzw. deren Eingangsschaltung verbindbar ist. In beiden Einbaupositionen setzt die Batterieeinheit 1 dabei im Wesentlichen die Kontur des Gehäuses der Elektronikeinheit 2 ohne Sprungstellen fort. Dabei kann die Batterieeinheit 1 durch Drehen von einer ersten Stellung in der die Batterieeinheit 1 mit der Elektronikeinheit 2 in einer ersten Einbauposition verbindbar, insbesondere steckbar ist, in eine zweite Stellung, in der die Batterieeinheit 1 in einer zweiten Einbauposition mit der Elektronikeinheit 2 verbindbar, insbesondere steckbar, ist gebracht werden. Die Drehung erfolgt dabei um eine der Batterieeinheit 1 und der Elektronikeinheit gemeinsame Längsachse L. Die Längsachse L bildet dabei auch eine Symmetrieachse bezüglich derer zwei Anschlussbuchsen an einer Stirnseite des Gehäuses der Elektronikeinheit 2 angeordnet sind, wobei die erste und die zweite Einbauposition durch die Anschlussbuchsen vorgegeben sind, und wobei in den Anschlussbuchsen die Gegenkontakte 3b, 4b, 5b angeordnet sind. Dabei sind in der ersten Anschlussbuchse der Elektronikeinheit 2 ein erster Stecker, der den zweiten Gegenkontakt 4b bildet und ein zweiter Stecker, der den ersten Gegenkontakt 5b bildet angeordnet. In der zweiten Anschlussbuchse sind ein dritter Stecker, der den zweiten Gegenkontakt 4b bildet und ein vierter Stecker, der den dritten Gegenkontakt 3b bildet, angeordnet. Die Stecker sind dabei asymmetrisch bzgl. der Längsachse L in den Anschlussbuchsen angeordnet.

In Figur 1 erfolgt die Ausrichtung der Batterieeinheit 1, um die Batterieeinheit 1 von der ersten in die zweite Einbauposition zu bringen, dabei durch eine Drehung um 180°, es sind aber auch andere Anordnung von Anschlussbuchsen möglich, so dass Drehungen um einen anderen Winkel erforderlich sind, um die Batterieeinheit 1 in eine entsprechende Stellung und Einbauposition zu bringen.

In der in Figur 1 gezeigten Stellung kann die Batterieeinheit 1 in der ersten Einbauposition mit der Elektronikeinheit 2 verbunden werden. In dieser Einbauposition sind der dritte Kontakt 3a und der dritte Gegenkontakt 3b sowie der zweite Kontakt 4a und der zweite Gegenkontakt 4b miteinander verbunden. In den ersten Kontakt 5a kann ein Stöpsel 12 eingebracht werden, so dass eine insbesondere unbeabsichtigte elektrische Kontaktierung des ersten Kontakts 5a verhindert wird.

In der zweiten Einbausposition gemäß Figur 1 sind der zweite Kontakt 4a und der zweite Gegenkontakt 4b und der erste Kontakt 5a und der erste Gegenkontakt 5b miteinander verbunden. Der dritte Kontakt 3a stellt in der zweiten Einbauposition keinen elektrischen Kontakt zu der Elektronikeinheit 2 und/oder der Eingangsschaltung her.

Ist jedoch der Stöpsel 12, wie in Figur 1 durch einen Pfeil ausgehend vom Stöpsel 12 zu dem ersten elektrischen Kontakt 5a der Batterieeinheit 1 angedeutet, gesetzt, so kann die Batterieeinheit 1 nicht in der zweiten Einbauposition eingebaut werden, da durch den Stöpsel 12 das Eingreifen des ersten Gegenkontakts 5b in den ersten Kontakt 5a verhindert wird. Alternativ kann vorgesehen sein, dass zwar die Batterieeinheit 1 trotz gesetztem Stöpsel 12 mit der Elektronikeinheit 2 mechanisch verbunden werden kann, aber der Stöpsel 12 die elektrische Verbindung zwischen dem ersten Kontakt 5a und dem ersten Gegenkontakt 5b verhindert.

Die in der Figur 1 gezeigten Mittel zur Strom- und/oder Spannungsbegrenzung 8a in der Batterieeinheit 1 bestehen aus einer Reihenschaltung einer elektrischen (Schmelz-)Sicherung, einem elektrischen Widerstand und einer Diode im dem Leitungszweig zwischen einem Pol der Batterie 10 und dem dritten elektrische Kontakt 3a. In dem Leitungszweig zwischen dem ersten Kontakt 5a und dem Pol der Batterie 10 an den auch der dritte Kontakt 5a angeschlossen ist, sind keine oder aber andere bzw. anders ausgelegte Mittel zur Strom- und/oder Spannungsbegrenzung vorgesehen. Ebenso ist der Leitungszweig, über den der andere Pol der Batterie 10 mit der dem zweiten Kontakt 4a verbunden ist, frei von Mitteln zur Spannungsbegrenzung. Wird also elektrische Energie über den ersten und den zweiten Kontakt 5a, 4a übertragen, so ergeben sich keine elektrischen Verlustleistungen, während in dem Fall, dass elektrische Energie aus der Batterie 10 über den zweiten und den dritten Kontakt 4a, 3a übertragen wird, die der Batterie 10 entnommene Leistung begrenzt wird und damit eine Verlustleistung auftritt.

Die Eingangsschaltung der Elektronikeinheit 2 besteht dabei also aus dem ersten, zweiten und dritten elektrischen Gegenkontakt 3b, 4b, 5b, die mit einem ersten bzw. einem zweiten Ausgang 6, 7 verbunden ist. Zwischen dem ersten und dem zweiten Ausgang 6, 7 ist dann eine Gleichspannung abgreifbar, die zum Betreiben der restlichen Elektronikeinheit, nicht gezeigt, verwendet werden kann.

Ferner kann vorgesehen sein, dass eine der Anschlussbuchsen, in der die als Gegenkontakte 3b, 4b, 5b dienenden Stecker angeordnet sind, durch eine Verschlusskappe 11 verschlossen wird, so dass weder eine mechanische noch eine elektrische Verbindung in der durch die Anschlussbuchse vorgegebene Einbauposition möglich ist. Eine entsprechende Verschlusskappe 11 ist in Figur 1 durch das Bezugszeichen 11 und die gestrichelte Linie im Bereich der Anschlussbuchse dargestellt.

In einem zweiten Leitungszweig zwischen dem dritten Gegenkontakt 3b der Eingangsschaltung und der Elektronikeinheit 1, insbesondere zwischen dem zweiten Ausgang 7 der Eingangsschaltung, sind ebenfalls Mittel zur Leistungsbegrenzung 8b vorgesehen. Diese Mittel 8b bestehen seitens der Eingangsschaltung analog zu der Batterieeinheit 1 aus einer Reihenschaltung einer Sicherung, eines Widerstands und einer Diode. Dadurch kann im Bereich der Kontakte 3a, 4a, 5a der Batterieeinheit 1 und der Gegenkontakte 3b, 4b, 5b kein zündfähiger Funken entstehen, da die Energie seitens der Batterieeinheit 1 und seitens der Elektronikeinheit 2 durch die Mittel 8a, 8b begrenzt wird.

In der ersten Einbauposition wird der zweite Kontakt 4a mit dem zweiten Gegenkontakt 4b und der dritte Kontakt 3a mit dem dritten Gegenkontakt 3b verbunden und somit der Batterie 10 über diese Kontakte 3a, 3b, 4a, 4b Energie entnommen. Dabei ist die der Batterie 10 entnommenen Leistung aber beschränkt.

In der zweiten Einbauposition ist der erste Kontakt 5a mit dem ersten Gegenkontakt 5b und der zweite Kontakt 4a mit dem zweiten Gegenkontakt 4b verbunden. Die Kontaktierung des zweiten Kontakts 4a erfolgt dabei in der ersten Einbauposition über den dritten Stecker und in der zweiten Einbauposition über den zweiten Stecker. Dieser erste und zweite Stecker sind seitens der Eingangsschaltung der Elektronikeinheit 2 über einen Leitungszweig miteinander und mit dem ersten Ausgang 6 der Eingangsschaltung verbunden. So dass am ersten Ausgang 6 unabhängig von der vorliegenden Einbauposition eine Verbindung zu einem Pol der Batterie 10 besteht, der frei von Mittel zur elektrischen Leistungs- und/oder Energiebeschränkung ist.

Der erste Gegenkontakt 5b ist ebenfalls über einen Leitungszweig der Eingangsschaltung mit dem zweiten Ausgang 7 der Eingangschaltung verbunden, wobei dieser Leitungszweig ebenfalls frei von Leistungsbeschränkenden Mitteln ist.

Durch die vorgeschlagene Vorrichtung ist somit in Abhängigkeit der Einbauposition der Batterieeinheit 1 und der in Abhängigkeit der Einbauposition vorliegenden Kontaktierung zwischen der Batterieeinheit 1 und der Elektronikeinheit 2 entweder eine begrenzte Leistung über den ersten und den zweiten Ausgang 6, 7 der Eingangschaltung von der Elektronikeinheit 2 entnehmbar oder es ist eine nicht durch entsprechende Mittel begrenzte Leistung, bspw. die Nennspannung, der Batterie 10 entnehmbar.

Die in der ersten Einbauposition gegebene Kontaktierung, die durch die Anordnung von Gegenkontakten 4b, 3b vorgegeben ist, kann dabei bei einem ersten (Feld-)Gerät vorliegen. Die durch die zweite Einbauposition gegebene Kontaktierung, die durch zweite Anordnung von Gegenkontakten 4b, 5b vorgegeben ist, kann bei eine zweiten (Feld-)Gerät vorliegen. Die Batterieeinheit 1 kann also dazu verwendet werden, an verschiedene (Feld-)Geräte mit jeweils unterschiedlich angeordneten Gegenkontakten bspw. 4b, 5b oder 3b, 5b aus Figur 1 angeschlossen zu werden.

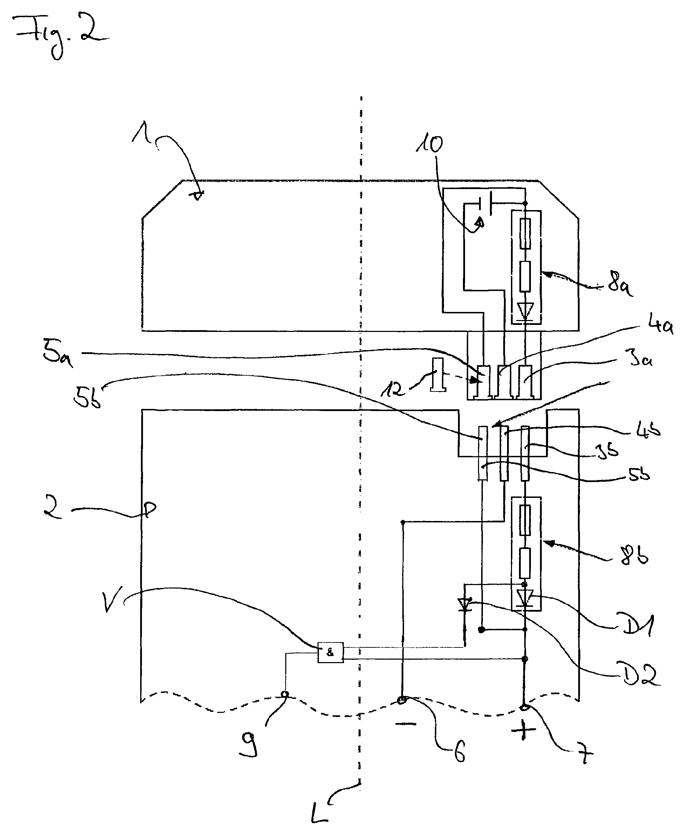

Figur 2 zeigt eine weitere Ausführungsform der vorgeschlagenen Erfindung. Dabei ist zum Verbinden der Batterieeinheit 1 mit der Elektronikeinheit 2 nur eine einzige Einbauposition vorgesehen.

Die Batterieeinheit 1 entspricht dabei der in Figur 1 gezeigten. Am Gehäuse der Elektronikeinheit 2 ist jedoch nur eine Einbauposition vorgesehen, die die drei Gegenkontakte 3b, 4b, 5b in Form von Steckern aufweist. Die Kontakte 3a, 4a, 5a der Batterieeinheit 1 können also nur in dieser Einbauposition mit den Gegenkontakten 3b, 4b, 5b verbunden werden. Aufgrund des höheren elektrischen Widerstands im ersten und im zweiten Leitungszweig gegenüber dem Leitungszweig über den der erste Kontakt 5a und der erste Gegenkontakt 5b miteinander verbunden sind, erfolgt aber eine Entnahme bzw. Übertragung elektrischer Energie aus der Batterie 10 über den ersten Kontakt 5a und den ersten Gegenkontakt 5b und den zweiten Kontakt 4a und den zweiten Gegenkontakt 4b. Es kann jedoch vorgesehen sein, den bereits erwähnten Stöpsel 12 zu verwenden und diesen über einen der Kontakte 3a, 4a, 5a bzw. einen der Gegenkontakte 3b, 4b, 5b zu stülpen, wobei der Stöpsel 12 dazu dient, die elektrische Kontaktierung vorzugsweise zwischen dem ersten Kontakt 5a und dem ersten Gegenkontakt 5b zu verhindern. In dem Fall wird die elektrische Energie aus der Batterie 10 über den zweiten Kontakt 4a und den zweiten Gegenkontakt 4b und den dritten Kontakt 5a und den dritten Gegenkontakt 5b übertragen.
Der erst Gegenkontakt 5b ist gemäß der Ausführungsform in Figur 2 ebenso wie der dritte Gegenkontakt 3b mit dem zweiten Ausgang der Eingangschaltung 7 verbunden. In dem Leitungszweig, der den ersten Gegenkontakt 5b mit dem zweiten Ausgang 6 verbindet, sind jedoch keine oder andere Mittel, insbesondere anders ausgelegte Mittel, zur Leistungs- bzw. Strom- und/oder Spannungsbegrenzung in Form von elektrischen Bauteilen vorgesehen.

Ferner ist eine elektrische und/oder elektronische Schaltung 9, V, D1, auch als Detektionsschaltung bezeichnet, vorgesehen, mittels der erkannt werden kann, in welcher Konfiguration die Batterieeinheit 1 mit der Eingangsschaltung und also der Elektronikeinheit 2 verbunden ist. Die Detektionsschaltung besteht dabei im Wesentlichen aus einer Vergleichsschaltung V, die ein erstes und ein zweites Eingangssignal miteinander vergleicht. Das erste Eingangssignal kann dabei an einem Abgriffspunkt vor oder zwischen den Mitteln zur Leistungsbegrenzung 8b abgegriffen werden. Das zweite Eingangssignal kann an einem Abgriffspunkt nach den Mitteln zur Leistungsbegrenzung 8b in dem zweiten Leitungszweig oder in dem Leitungszweig zwischen dem ersten Gegenkontakt 5b und dem zweiten Ausgang 7 der Eingangsschaltung abgegriffen werden. In dem Ausführungsbeispiel gemäß Figur 2 befindet sich der Abgriff vor und hinter einer Diode D1 im zweiten Leitungszweig. Zwischen dem Abgriff für das erste Eingangssignal und einem Eingang der Komparatorschaltung V ist eine weitere Diode D2 vorgesehen, die im Wesentlichen dieselben physikalischen Eigenschaften, wie bspw. Kennlinie etc., aufweist, wie die zur Leistungsbegrenzung im zweiten Leitungszweig vorgesehene Diode D1. In dem Fall, dass die Energieentnahme aus der Batterie 10 über den dritten Kontakt 3a und dritten Gegenkontakt 3b erfolgt ist somit die bspw. das erste und das zweite Eingangssignal der Detektionsschaltung im Wesentlichen gleich. Als erstes und/oder zweites Eingangssignal kann eine elektrische Spannung oder ein elektrischer Strom dienen. In dem Fall, dass die Energieentnahme über den ersten Kontakt 5a und den ersten Gegenkontakt 5b erfolgt, unterscheidet sich das erste Eingangssignal von dem zweiten Eingangssignal, da über den ersten und den zweiten Leitungszweig im Wesentlichen keine elektrische Energie übertragen wird. Somit unterscheidet sich das elektrische Potential am Abgriffspunkt für das erste Eingangssignal von dem elektrischen Potential am Abgriffspunkt vom zweiten Eingangssignal, da der zweite Abgriffspunkt in dem Leitungszweig liegt bzw. elektrisch mit diesem verbunden ist, über den elektrische Energie an die Elektronikeinheit 2 übertragen wird. Von der Detektionseinheit V kann ein Ausgangssingal bereitgestellt werden, welches angibt, in welcher Anschlusskonfiguration die Batterieeinheit 1 mit der Eingangsschaltung der Elektronikeinheit 2 verbunden ist. Dieses Ausgangssignal kann über den Ausgang 9 abgegriffen und/ an die Elektronikeinheit übermittel werden.

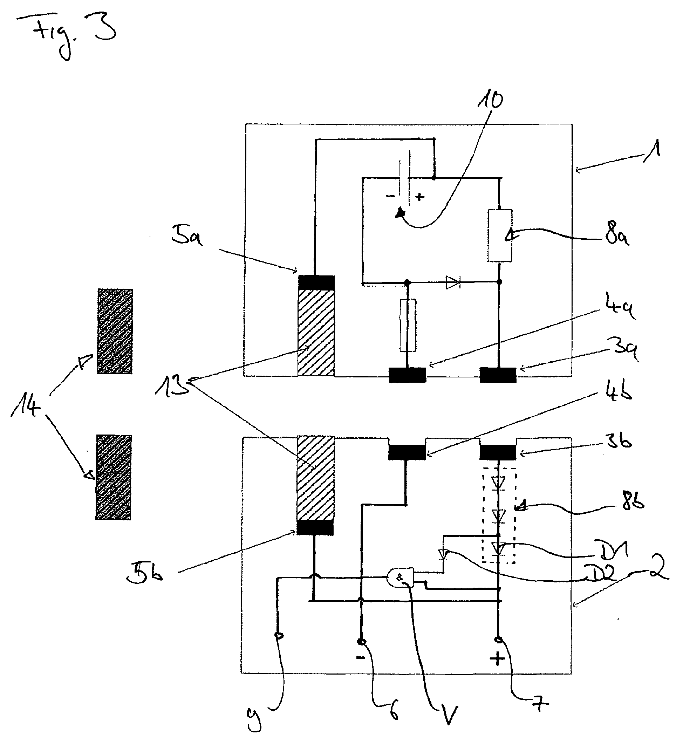

Figur 3 zeigt eine weitere Ausführungsform der vorgeschlagenen Erfindung. Die Batterieeinheit 1 weist wie bereits in den vorherigen Ausführungsbeispielen gemäß Figur 1 und Figur 2 drei Kontakte 3a ,4a, 5a auf. Dabei ist ein erster Pol, in diesem Fall der elektrisch positive Pol der Batterie 10, mit dem ersten Kontakt 5a und dem dritten Kontakt 3a verbunden. Der erste Kontakt 5a ist dabei in einer Buchse des Gehäuses der Batterieeinheit 1 angeordnet. In diese Buchse können entweder ein Kontakt- oder ein Verschlussmittel 13, 14 eingesetzt werden, so dass der erste Kontakt 5a mit dem ersten Gegenkontakt 5b elektrisch kontaktierbar ist oder elektrisch von dem ersten Gegenkontakt 5b elektrisch isoliert ist. Der dritte Kontakt 3a ist über Mittel zur Leistungsbegrenzung 8a mit dem elektrisch positiven Pol der Batterie 10 verbunden. Der elektrisch negative Pol der Batterie 10 ist mit dem zweiten Kontakt 4a der Batterieeinheit a über eine elektrische Sicherung verbunden. Der Leitungszweig, über den der negative Pol der Batterie 10 mit dem zweiten Kontakt 4a verbunden ist, ist mit dem Leitungszweig über den der dritte Kontakt 3a mit dem positiven Pol der Batterie 10 verbunden ist, über ein Diode in Sperrschaltung verbunden. Diese Verbindung befindet sich dabei zwischen dem negativen Pol der Batterie 10 und der Schmelzsicherung einerseits und zwischen den Mitteln zur Spannungsbegrenzung 8a und dem dritten Kontakt 3a andererseits.

Die Eingangsschaltung der Elektronikeinheit 2 weist drei Gegenkontakte 3b, 4b, 5b auf, wobei der erste Gegenkontakt 5b in einer Buchse des Gehäuses der Elektronikeinheit 2 angeordnet ist, so dass ein Kontakt- oder ein Verschlussmittel 13, 14 in die Buchse einbringbar ist über welches Kontaktmittel 14 ein elektrischer Kontakt zu dem ersten Kontakt 5a der Batterieeinheit 1, insbesondere über ein in der Buchse, in der der erste Kontakt angeordnet ist, eingebrachtes Kontaktmittel 14, herstellbar, bzw. über welches Verschlussmittel 13 der erste Gegenkontakt 5b elektrisch isoliert wird.

Der zweite Kontakt 4a und der dritte Kontakt 3a sind über eine Steckverbindung, die zur elektrischen als auch mechanischen Verbindung zwischen der Batterieeinheit 1 und der Elektronikeinheit 2 dient, mit dem zweiten Gegenkontakt 4b und dem dritten Gegenkontakt 3b verbindbar. Der dritte Gegenkontakt 3b ist mit dem zweiten Ausgang 7 der Eingangsschaltung über drei in Reihe geschaltete Dioden 8b verbunden. Ferner ist der erste Gegenkontakt 5b mit dem zweiten Ausgang 6 der Eingangschaltung verbunden, wobei im Leitungszweig zwischen dem ersten Gegenkontakt 5b und dem zweiten Ausgang 7 keine elektrischen und/oder elektronischen der Leistungsbegrenzung dienenden Mittel vorgesehen sind. Der zweite Gegenkontakt 4b ist mit dem ersten Ausgang 6 der Eingangsschaltung verbunden.

Die Komparatorschaltung aus Figur 3 weist ebenfalls einen ersten und einen zweiten Abgriff für das erste und das zweite Eingangssignal auf, wobei der erst Abgriff vor und der zweite Abgriff nach der Diode D1 zur Spannungsbegrenzung vorgesehen ist und zwischen dem Abgriff für das erste Eingangssignal und dem Eingang der Komparatorschaltung V eine weitere Diode D2 vorgesehen ist. So dass in dem Fall der Energieentnahme aus der Batterie 10 über den dritten Kontakt 3a und den dritten Gegenkontakt 3b der Spannungsabfall zwischen dem ersten und dem zweiten Eingang der Komparatorschaltung V im Wesentlichen identisch ist.

### Bezugszeichenliste

- 1: Batterieeinheit
- 2: Elektronikeinheit
- 3a: dritter Kontakt
- 3b: dritter Gegenkontakt
- 4a: zweiter Kontakt
- 4b: zweiter Gegenkontakt
- 5a: erster Kontakt
- 5b: erster Gegenkontakt
- 6: erster Ausgang
- 7: zweiter Ausgang
- 8a: Mittel zur Leistungsbegrenzung
- 8b: Mittel zur Leistungsbegrenzung
- 9: Ausgang Detektionsschaltung
- 10: Batterie
- 11: Verschlusskappe
- 12: Stöpsel
- 13: elektrisch isolierendes Material
- 14: elektrisch leitendes Material
- D1: erste Diode
- D2: zweite Diode
- L: Längsachse
- V: Kompartor-/Vergleichsschaltung

## Patentansprüche

1. Vorrichtung umfassend eine Batterieeinheit (1) und eine Elektronikeinheit (2),
wobei die Batterieeinheit (1) eine Batterie (10) mit einem ersten und einem zweiten Pol aufweist, wobei die Batterieeinheit (1) wenigstens einen ersten, wenigstens einen zweiten und wenigstens einen dritten elektrischen Kontakt (3a, 4a, 5a) aufweist,
wobei der erste Kontakt (5a) und der dritte Kontakt (3a) mit dem ersten Pol verbunden sind, und wobei der zweite Kontakt (4a) mit dem zweiten Pol verbunden ist, wobei in einem Leitungszweig, der den dritten Kontakt (3a) mit dem ersten Pol der Batterie (10) verbindet, Mittel zur Strom- und/oder Spannungsbegrenzung (8a) vorgesehen sind, wobei in einem Leitungszweig, der den ersten Pol mit dem ersten Kontakt (5a) verbindet, keine Mittel zur Strom- und/oder Spannungsbegrenzung (8a) vorgesehen sind,
wobei die Elektronikeinheit (2) eine Eingangsschaltung mit wenigstens einem ersten und wenigstens einem zweiten elektrischen Gegenkontakt (3b, 4b; 4b, 5b) und wenigstens einem dritten elektrischen Gegenkontakt zur Aufnahme elektrischen Energie von der Batterieeinheit (1) im Wesentlichen über den ersten und zweiten Kontakt (3a, 4a) oder im Wesentlichen über den zweiten und dritten Kontakt (4a, 5a) der Batterieeinheit (1) aufweist, wobei die Batterieeinheit (1) so mit der Eingangsschaltung verbindbar ist, dass elektrische Energie aus der Batterie (10) der Batterieeinheit (1) von der Batterieeinheit (1) an die Elektronikeinheit (2) im Wesentlichen über den ersten und den zweiten Kontakt (5a, 4a) und den ersten und zweiten Gegenkontakt (5b, 4b) oder im Wesentlichen über den zweiten und den dritten Kontakt (4a, 3a) und den zweiten und den dritten Gegenkontakt (4b, 3b) übertragbar ist,
**dadurch gekennzeichnet, dass**
die Batterieeinheit (1) so mit der Eingangsschaltung der Elektronikeinheit (2) verbindbar ist, dass in einer ersten Einbauposition nur der zweite Kontakt (4a) mit dem zweiten Gegenkontakt (4b)
und der dritte Kontakt (3a) mit dem dritten Gegenkontakt (3b) verbunden sind,
und dass
in einer zweiten Einbauposition nur der erste Kontakt (5a) mit dem ersten Gegenkontakt (5b) und
der zweite Kontakt (4a) mit dem zweiten Gegenkontakt (4b) elektrisch verbunden sind.

2. Vorrichtung nach Anspruch 1,
wobei ein Verschlussmittel (11, 12, 13) vorgesehen ist, das dazu dient, die elektrische Kontaktierung von zumindest einem der Kontakte (3a, 4a, 5a) zu verhindern.

3. Vorrichtung nach dem vorherigen Anspruch,
wobei das Verschlussmittel (11, 12, 13) dazu dient, wenigstens einen der Kontakte (3a, 4a, 5a) und/oder wenigstens einen der Gegenkontakte (3b, 4b, 5b) zu verschließen.

4. Vorrichtung nach dem vorherigen Anspruch,
wobei die Strom- und/oder Spannungsbegrenzung durch wenigstens ein erstes elektrisches Bauteil (8a, 8b) im ersten und/oder im zweiten Leitungszweig erfolgt.

5. Vorrichtung nach Anspruch 4,
wobei eine Kontaktierung der Batterieeinheit (1) über den ersten und den zweiten Kontakt (5a, 4a) und den ersten und zweiten Gegenkontakt (5b, 4b) dazu dient, die Mittel zur Strom- und/oder Spannungsbegrenzung (8a, 8b) zu überbrücken.

6. Vorrichtung nach wenigstens einem der Ansprüche 1 bis 5,
wobei die Eingangsschaltung ferner einen ersten und einen zweiten Ausgang (6, 7) aufweist, über welchen die der Elektronikeinheit (2) zur Verfügung stehende Energie abgreifbar ist, und wobei der erste Gegenkontakt (5b) und/oder der dritte Gegenkontakt (3b) mit dem zweiten Ausgang (7) verbunden sind und wobei der zweite Gegenkontakt mit dem ersten Ausgang (6) verbunden ist.

7. Vorrichtung nach einem der Ansprüche 4 bis 6,
ferner umfassend eine elektrische Schaltung (V, D2, 9), die dazu dient, zu erkennen, ob die Energieversorgung der Elektronikeinheit (2) im Wesentlichen über den ersten und den zweiten Kontakt (5a, 4a) bzw. Gegenkontakt (5b, 4b) oder im Wesentlichen über den zweiten und den dritten Kontakt (4a, 3a) bzw. Gegenkontakt (4b, 3b) erfolgt.

8. Vorrichtung nach dem vorherigen Anspruch,
wobei die elektrische Schaltung (V, D2, 9) aus einer Komparatorschaltung (V) besteht, die ein erstes und ein zweites Eingangssignal miteinander vergleicht, und
wobei das erste Bauteil (D1) zwischen einem Abgriff für das erste Eingangssignal und einem Abgriff für das zweite Eingangssignal angeordnet ist.

9. Vorrichtung nach dem vorherigen Anspruch,
wobei zwischen dem Abgriff für das erste Eingangssignal und einem entsprechenden Eingang der Komparatorschaltung (V) ein dem ersten Bauteil (D1) entsprechendes zweites Bauteil (D2) angeordnet ist.

10. Feldgerät der Prozessautomatisierungstechnik mit einer Vorrichtung nach einem der Ansprüche 1 bis 9.

## Claims

1. Apparatus comprising a battery unit (1) and an electronic unit (2), wherein the battery unit (1) has a battery (10) with a first and a second pole,
wherein the battery unit (1) has at least a first, at least a second and at least a third electrical contact (3a, 4a, 5a),
the first contact (5a) and the third contact (3a) being connected to the first pole, and the second contact (4a) being connected to the second pole,
wherein means to limit the current and/or voltage (8a) are provided in a branch of the wire connecting the third contact (3a) with the first pole of the battery (10),
wherein no means to limit the current and/or voltage (8a) are provided in a branch of the line connecting the first pole with the first contact (5a),
wherein the electronic unit (2) has an input circuit with at least a first and at least a second electrical counter-contact (3b, 4b ; 4b, 5b) and at least a third electrical counter-contact to receive electrical energy from the battery unit (1) essentially via the first and second contact (3a, 4a) or essentially via the second and third contact (4a, 5a) of the battery unit (1),
wherein the battery unit (1) can be connected to the input circuit in such a way that electrical energy from the battery (10) of the battery unit (1) can be transmitted from the battery unit (1) to the electronic unit (2) essentially via the first and second contact (5a, 4a) and the first and second counter-contact (5b, 4b) or essentially via the second and third contact (4a, 3a) and the second and third counter-contact (4b, 3b),
**characterized in that**
the battery unit (1) can be connected to the input circuit of the electronic unit (2) in such a way that
- in a first installation position, only the second contact (4a) is connected to the second counter-contact (4b), and the third contact (3a) is connected to the third counter-contact (3b),
- in a second installation position, only the first contact (5a) is electrically connected to the first counter-contact (5b), and the second contact (4a) is electrically connected to the second counter-contact (4b).

2. Apparatus as claimed in Claim 1,
wherein a means for sealing (11, 12, 13) is provided that serves to prevent electrical contacting of at least one of the contacts (3a, 4a, 5a).

3. Apparatus as claimed in the previous claim,
wherein the means for sealing (11, 12, 13) serves to seal off at least one of the contacts (3a, 4a, 5a) and/or at least one of the counter-contacts (3b, 4b, 5b).

4. Apparatus as claimed in the previous claim,
wherein the current and/or voltage limitation is effectuated by at least a first electrical component (8a, 8b) in the first and/or in the second branch of the line.

5. Apparatus as claimed in Claim 4,
wherein contacting of the battery unit (1) via the first and the second contact (5a, 4a) and the first and second counter-contact (5b, 4b) serves to bridge the means for current and/or voltage limitation (8a, 8b).

6. Apparatus as claimed in at least one of the Claims 1 to 5,
wherein the input circuit further comprises a first and a second output (6, 7), via which the energy available to the electronic unit (2) can be tapped, and wherein the first counter-contact (5b) and/or the third counter-contact (3b) are connected to the second output (7), and wherein the second counter-contact is connected to the first output (6).

7. Apparatus as claimed in one of the Claims 4 to 6,
further comprising an electrical circuit (V, D2, 9), which is used to detect whether energy is supplied to the electronic unit (2) essentially via the first and second contact (5a, 4a) or counter-contact (5b, 4b), or essentially via the second and third contact (4a, 3a) or counter-contact (4b, 3b).

8. Apparatus as claimed in the previous claim,
wherein the electrical circuit (V, D2, 9) consists of a comparator circuit (V), which compares a first input signal and a second input signal, and
wherein the first component (D1) is arranged between a tapping point for the first input signal and a tapping point for the second input signal.

9. Apparatus as claimed in the previous claim,
wherein a second component (D2) which corresponds to the first component (D1) is arranged between the point for tapping the first input signal and a corresponding input of the comparator circuit (V).

10. Field device in process automation engineering with an apparatus as claimed in one of the Claims 1 to 9.

## Revendications

1. Dispositif comprenant une unité de batterie (1) et une unité électronique (2), pour lequel l'unité de batterie (1) comporte une batterie (10) avec un premier et un deuxième pôle,
dispositif pour lequel l'unité de batterie (1) comporte au moins un premier, au moins un deuxième et au moins un troisième contact électrique (3a, 4a, 5a),
le premier contact (5a) et le troisième contact (3a) étant reliés avec le premier pôle, et le deuxième contact (4a) étant relié avec le deuxième pôle,
dispositif pour lequel sont prévus, dans une branche reliant le troisième contact (3a) avec le premier pôle de la batterie (10), des moyens destinés à la limitation du courant et/ou de la tension (8a),
dispositif pour lequel n'est prévu, dans une branche reliant le premier pôle avec le premier contact (5a), aucun moyen destiné à la limitation du courant et/ou de la tension (8a),
dispositif pour lequel l'unité électronique (2) comporte un circuit d'entrée avec au moins un premier et au moins un deuxième contre-contact électrique (3b, 4b ; 4b, 5b) et au moins un troisième contre-contact électrique destiné à l'absorption de l'énergie de l'unité de batterie (1) pour l'essentiel par l'intermédiaire du premier et du deuxième contact (5a, 4a) ou pour l'essentiel par l'intermédiaire du deuxième et du troisième contact (4a, 3a) de l'unité de batterie (1),
dispositif pour lequel l'unité de batterie (1) peut être reliée avec le circuit d'entrée de telle sorte à pouvoir transmettre l'énergie électrique issue de la batterie (10) de l'unité de batterie (1), de l'unité de batterie (1) vers l'unité électronique (2), pour l'essentiel par l'intermédiaire du premier et du deuxième contact (5a, 4a) et du premier et du deuxième contre-contact (5b, 4b) ou pour l'essentiel par l'intermédiaire du deuxième et du troisième contact (4a, 3a) et du deuxième et du troisième contre-contact (4b, 3b),
**caractérisé**
**en ce que** l'unité de batterie (1) peut être reliée avec le circuit d'entrée de l'unité électronique (2) de telle sorte que
- dans une première position de montage, seul le deuxième contact (4a) est relié avec le deuxième contre-contact (4b) et le troisième contact (3a) avec le troisième contre-contact (3b),
- dans une deuxième position de montage, seul le premier contact (5a) est relié avec le premier contre-contact (5b) et le deuxième contact (4a) avec le deuxième contre-contact (4b).

2. Dispositif selon la revendication 1,
pour lequel est prévu un moyen de verrouillage (11, 12, 13), qui sert à empêcher la mise en contact électrique d'au moins l'un des contacts (3a, 4a, 5a).

3. Dispositif selon la revendication précédente,
pour lequel le moyen de verrouillage (11, 12, 13) sert à verrouiller au moins l'un des contacts (3a, 4a, 5a) et/ou au moins l'un des contre-contacts (3b, 4b, 5b).

4. Dispositif selon la revendication précédente,
pour lequel la limitation de courant et/ou de tension est réalisée par au moins un composant électrique (8a, 8b) dans la première branche et/ou dans la deuxième branche du circuit.

5. Dispositif selon la revendication 4,
pour lequel une mise en contact de l'unité de batterie (1) par l'intermédiaire du premier et du deuxième contact (5a, 4a) et du premier et du deuxième contre-contact (5b, 4b) sert à ponter les moyens de limitation de courant et/ou de tension (8a, 8b).

6. Dispositif selon au moins l'une revendications 1 à 5,
pour lequel le circuit d'entrée comprend en outre une première et une deuxième sortie (6, 7), par l'intermédiaire de laquelle l'énergie mise à disposition de l'unité électronique (2) peut être prélevée, et pour lequel le premier contre-contact (5b) et/ou le troisième contre-contact (3b) sont reliés avec la deuxième sortie (7), et pour lequel le deuxième contre-contact est relié avec la première sortie (6).

7. Dispositif selon l'une des revendications 4 à 6,
comprenant en outre un circuit électrique (V, D2, 9), qui sert à détecter si l'alimentation en énergie de l'unité électronique (2) intervient pour l'essentiel par l'intermédiaire du premier et du deuxième contact (5a, 4a) ou contre-contact (5b, 4b) ou pour l'essentiel par l'intermédiaire du deuxième et du troisième contact (4a, 3a) ou contre-contact (4b, 3b).

8. Dispositif selon la revendication précédente,
pour lequel le circuit électrique (V, D2, 9) est constitué d'un circuit comparateur (V), qui compare entre eux un premier et un deuxième signal d'entrée, et pour lequel le premier composant (D1) est disposé entre un point de prélèvement pour le premier signal d'entrée et un point de prélèvement pour le deuxième signal d'entrée.

9. Dispositif selon la revendication précédente,
pour lequel est disposé, entre le point de prélèvement pour le premier signal d'entrée et une entrée correspondante du circuit comparateur (V), un deuxième composant (D2) correspondant au premier composant (D1).

10. Appareil de terrain de la technique d'automatisation des process avec un
dispositif selon l'une des revendications 1 à 9.
